# EUROPEAN PATENT APPLICATION

(11) **EP 1 594 264 A1**
(43) Date of publication of application: **09.11.2005**
(21) Application number: 04710497.1
(22) Date of filing: 12.02.2004
(51) Int. Cl.: H04L 12/56

(54) **ROUTER SETTING METHOD AND ROUTER DEVICE**

(30) Priority: 12.02.2003 JP 2003033384; 06.02.2004 JP 2004030350
(71) Applicant: MATSUSHITA ELECTRIC INDUSTRIAL CO., LTD., Kadoma-shi, Osaka 571-8501 (JP)
(72) Inventor: IKEDA, Shinkichi, Yokohama-shi, Kanagawa 224-0006 (JP); MATSUMOTO, Taisuke, Yokohama-shi, Kanagawa 220-0004 (JP); KOBAYASHI, Hirokazu, Tokyo 206-0824 (JP); KUMAZAWA, Masayuki, Yokohama-shi, Kanagawa 224-0021 (JP); FUNABIKI, Makoto, Yokohama-shi, Kanagawa 230-0001 (JP); KAWAHARA, Toyoki, Tokyo 182-0007 (JP)
(74) Representative: Pautex Schneider, Nicole Véronique
(86) International application number: PCT/JP2004/001458
(87) International publication number: WO 2004/073270

(57) **Abstract**

A router device (10) includes a VRRP (Virtual Redundancy Router Protocol) realizing a virtual router device for operating a plurality of router devices virtually as one router device. The router device (10) further includes a virtual router processing section (15) for executing virtual router processing and a virtual router information processing section (14) for extracting virtual router information upon reception of a virtual router information message and performing setting necessary for operation as a virtual router. When performing a new connection to a local area network, the virtual router information can be automatically set. Thus, it is possible to significantly reduce the load required for building a virtual router system by manual setting conventionally performed by a management operator.

## Description

### TECHNICAL FIELD

The present invention relates to a router setting method and router device for registering a new router device to a virtual router system on a mobile IP (Internet Protocol) network.

### BACKGROUND ART

There is known a system using a virtual router redundancy protocol VRRP (Virtual Router Redundancy Protocol for IPv6) on an IP network, which is a system having router devices for communication with other sub-networks coexisted in plurality on the same sub-network so that, in the even of a failure occurrence in a certain router device, another router device can become an alternative to continue the communication.

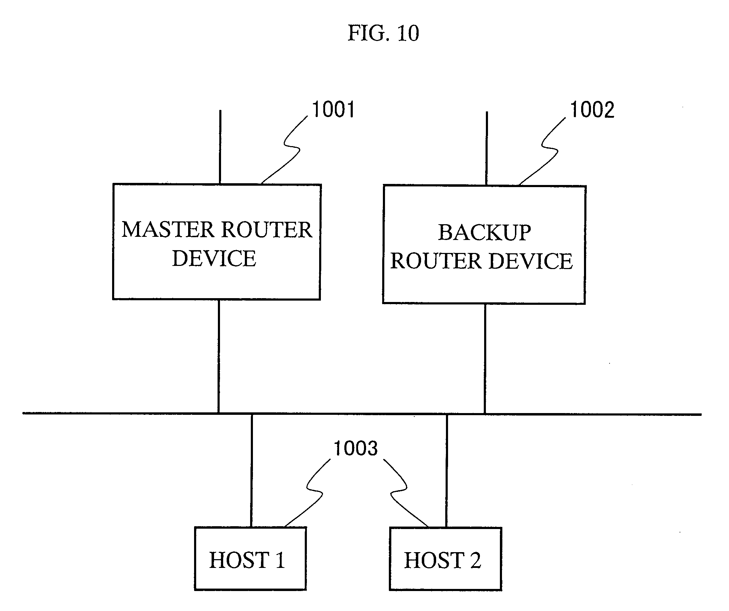

Fig. 10 is a diagram showing a conventional system arrangement.

In Fig. 10, a master router device 1001 and a backup router device 1002 are connected to the same sub-network, together with host terminals 1003 (hereinafter, referred to as nodes). In this system, a router device group for VRRP execution is group-designated by means of a virtual router identifier VRID (Virtual Router ID). Within the same sub-network, from a group of router devices having the same VRID, one device is selected as a master router device, to actually distribute packets.

As for the backup router device, in the event of a failure occurrence in the master router device, the backup router device itself turns into a master router device and distributes packets. The master router device and the backup router device show virtually the same address (hereinafter, referred to as a virtual router address) to the nodes. This allows the node to send packets with use of a virtual router address taken as a default router, without being conscious of whether to take a destination to the master router device or to the backup router device.

The master router device 1001 regularly sends, to the backup router device, a VRRP advertisement packet including a priority for the master router device to turn into a master router device. The backup router device 1002, when receiving a VRRP advertisement packet from the master router device 1001 having a priority higher than the priority of the backup router device itself within a constant time period of Master_Down_Timeout, resets a Master_Down_Timeout timer and makes certain of the master router device 1001 being operating. In the case of receiving a VRRP advertisement packet from a master router device having a priority lower than the priority of the backup router device itself , the VRRP advertisement packet is discarded as it is without resetting the Master_Down_Timeout timer.

Meanwhile, when the Master_Down_Timeout timer expires, the backup router device 1002 decides a failure occurrence in the master router device 1001. The backup router device itself turns into a master router device and sends a VRRP advertisement packet to the router device of the same group. Because Master_Down_Timeout value is set smaller for the higher priority and greater for the lower priority, the master router device 1001 can be set in accordance with the priority.

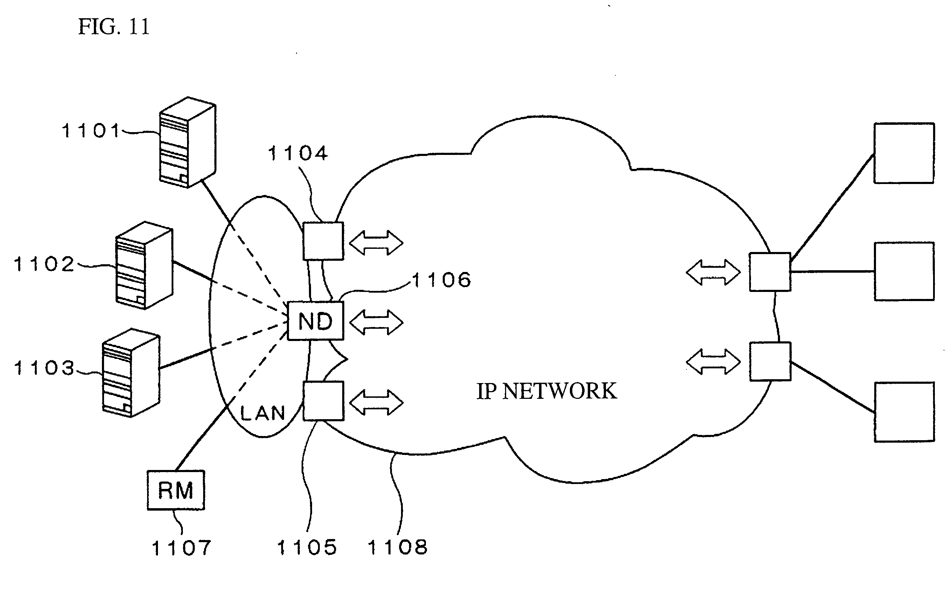

Meanwhile, JP-A-2000-307657 has a system which uses a plurality of routers by switchover thereof without the use of VRRP. In Fig. 11, there is disclosed a virtual router system that host terminals 1101 to 1103 are connected to an IP network 1108 by means of one set of router devices 1104 1105 and a network dispatcher 1106, so that a monitor device 1107 can monitor the operation status of the router devices and notify the host terminals 1101 to 1103 of a usability of the router devices 1104, 1105.

However, the above system, when newly registering a router device, is required to manually set previously a virtual IP address, a virtual MAC address, a priority, etc. in advance of operating the virtual router device. Particularly, in a virtual router group constituted with a plurality of movable router devices (mobile routers), there are frequent occurrences of connections to or disconnections from the system, thus problematically increasing the burden on the operator. Meanwhile, in the JP-A-2000-307657 system, the virtual router system is required for the virtual router system to arrange a monitor device for monitoring the individual virtual router devices therein.

Meanwhile, with a setting change by the operator during roaming, it takes a time in setting possibly resulting in missing of communication timing. This also has a problem of increased loss.

### DISCLOSURE OF THE INVENTION

It is an object of the present invention to relieve the load in router registration setting by the operator and to prevent communication loss, in an environment where a virtual router device is configured by a plurality of mobile routers without the provision of a monitor device.

In a router setting method of the invention, the existing router device distributes the information about a virtual router device belonging thereto while a router device, to newly connect to a network, acquires the distributed virtual router information. The new router device extracts the information required for a virtual router process and sets it therein, then starting up VRRP and executing a virtual router process. This allows the new router device to automatically setting the data required for the virtual router process, reducing the load on the operator and preventing the communication loss as caused by a delayed registration of a new router device.

A router setting method of the invention comprises: a step for a first router device for executing a virtual router process for operating, virtually as one router device, a plurality of router devices connected to a local area network, to send virtual router information as information required for the virtual router process to a second router device newly connected to the local network; a step for the newly connected second router device to receive the virtual router information; and a step for the second router device to make a setting required for the virtual router process, on a basis of the virtual router information. The management burden on the operator is to be relieved by automating the virtual router setting to a router device performed manually in the conventional.

Meanwhile, a router setting method according to the invention further comprises a step for the newly connected second router device to request the virtual router information to the first router device, the first router device, received the request, sending virtual router information to the second router device. Because virtual router information when necessary can be immediately obtained to complete virtual router setting in a brief time, communication loss can be prevented that is due to delayed registration of a new router device.

Meanwhile, in a router setting method according to the invention, the first router device sends the virtual router information at a regular interval. When registering a plurality of router devices to a virtual router system, there is no need to inquire for the individual router device. Thus, virtual router information can be offered while suppressing network load.

Meanwhile, in a router setting method according to the invention, the virtual router information includes a virtual router identifier, a virtual IP address and a virtual MAC address. Acquiring those pieces of information, the router device is allowed to start up the operation as a virtual router and participate in a virtual router system.

A router device of the invention comprises: a virtual router processing section for operating, virtually as one router device, a plurality of router devices connected to a local area network; a receiving section for receiving virtual router information required for the virtual router process; and a virtual router information processing section for making a setting required for the virtual router process, on a basis of the virtual router information. Due to this, the management burden on the operator is to be relieved by automating the virtual router setting to a router device performed manually in the conventional.

Meanwhile, in a router device according to the invention, the virtual router information processing section further executes, in a predetermined timing, a process to request for the virtual router information. Because virtual router information when necessary can be immediately obtained to complete virtual router setting in a brief time, communication loss can be prevented that is due to delayed registration of a new router device.

Meanwhile, in a router device according to the invention, the predetermined timing is at a time the virtual router information processing section detects a connection to the local area network. Due to this, because virtual router setting is made together with a connection to a network segment connected with the virtual router system, realized is a plug-and-play-compatible router device capable of achieving an immediate participation in a virtual router system.

Meanwhile, in a router device according to the invention, there is further comprised of an instruction input section where a request instruction for virtual router information is to be made from a user, to execute a process for requesting for virtual router information when the virtual router information processing section is inputted with the instruction. Due to this, registration is possible to the virtual router system in a desired timing by switch turning-on, button pushdown or so, thus realizing a flexible router device.

Meanwhile, in a router device according to the invention, the virtual router information processing section, when receiving a request for the virtual router information, further executes a process to send the virtual router information being set as a response thereto to the router sending the request. Due to this, because virtual router information can be offered immediately in a desired time, a virtual router system can be constituted in a brief time, thus preventing communication loss that is due to delayed registration of a new router device.

Meanwhile, in a router device according to the invention, the virtual router information processing section, when receiving a request for the virtual router information, further executes a process to send, to a source, virtual router information being set as a response thereto. Due to this, when registering a plurality of router devices to a virtual router system, there is no need to inquire for the individual router device. Thus, virtual router information can be offered while suppressing network load.

As described above, the present invention can dynamically acquire virtual router information from the existing router system to thereby setting up a virtual router mechanism of the device concerned, thus making it possible to automate the virtual router setting performed manually in the conventional and to relieve the burden on the managing operator. Particularly, in such a virtual router group constituted with a plurality of movable routers (mobile routers), there is eliminated the need of sequentially setting virtual routers onto the routers in accordance with the configuration in the relevant time. Besides relieved burden in setting, it is possible to avoid the missing of communication timing due to a setting during roaming.

Furthermore, the use of a virtual router information solicitation message enables to complete information acquisition in a brief time, enabling rapid registration of a router.

### BRIEF DESCRIPTION OF THE DRAWINGS

Fig. 1 is a figure showing a configuration of a router device in embodiment 1 of the present invention.
Fig. 2 is a figure showing an arrangement of a local area network in embodiment 1 of the invention.
Fig. 3(a) is a figure showing a transmission message format in embodiment 1 of the invention.
Fig. 3(b) is a figure showing a Type field value in embodiment 1 of the invention.
Fig. 4 is a figure showing an operation sequence in embodiment 1 of the invention.
Fig. 5 is a figure showing an operation sequence in embodiment 1 of the invention.
Fig. 6 is a figure showing an operation sequence in embodiment 1 of the invention.
Fig. 7 is a figure showing an operation sequence in embodiment 1 of the invention.
Fig. 8 is a flowchart showing an operation of the router device in embodiment 1 of the invention.
Fig. 9 is a figure showing a configuration of a router device in embodiment 1 of the invention.
Fig. 10 is a figure showing an arrangement of a conventional virtual router system.
Fig. 11 is a figure showing an arrangement of a conventional virtual router system.

### BEST MODE FOR CARRYING OUT THE INVENTION

Hereunder, embodiments of the present invention will be explained with use of the drawings.

### (Embodiment 1)

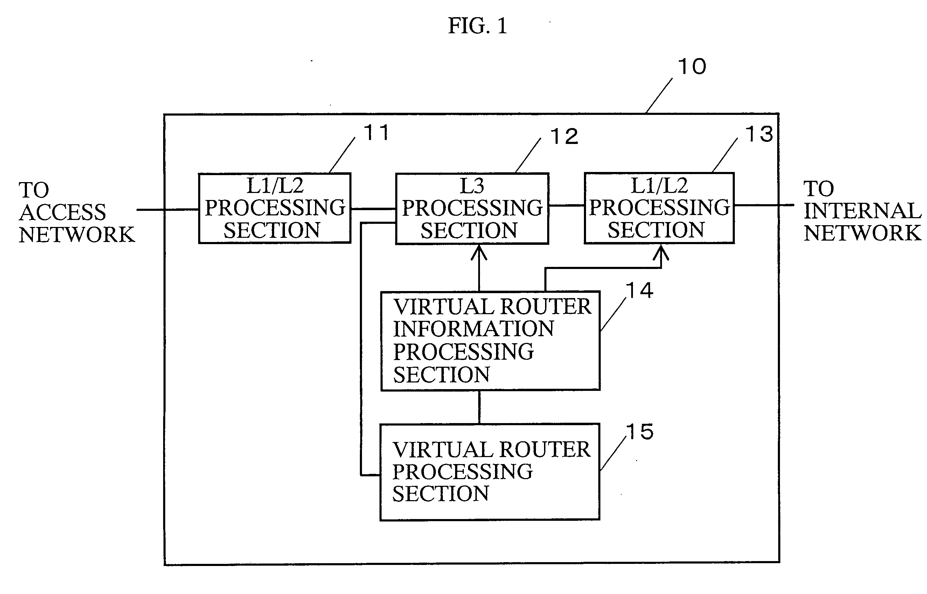

Using Figs. 1 to 8, explanation is made on a virtual router system in embodiment 1 of the invention.

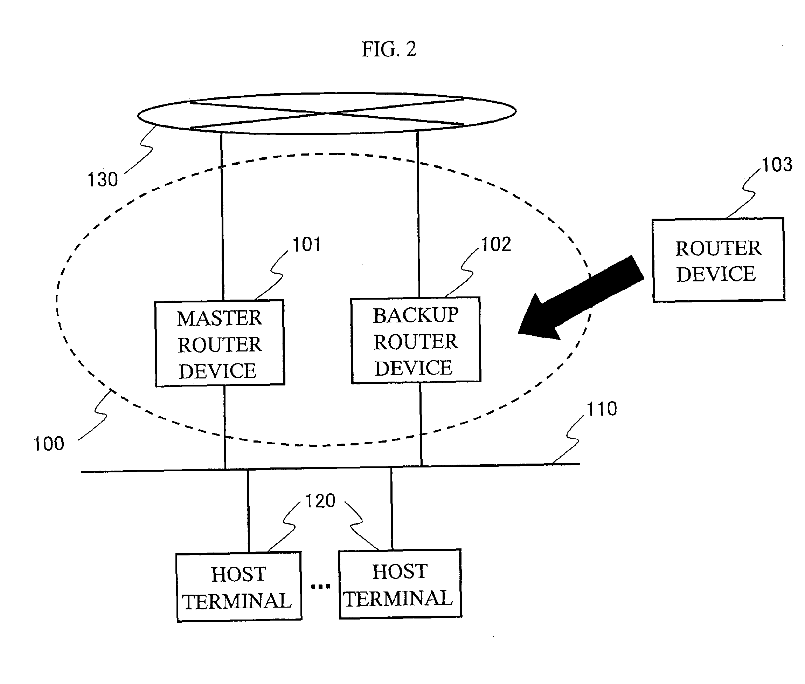

Fig. 2 is a diagram showing an arrangement of a local area network according to the invention, having an arrangement with a virtual router group 100, a master router device 101, a backup router device 102, a router device 103, a network segment 110, host terminals 120 and an external network 130.

Now, explanation is made on the operation of the virtual router system of the invention.

The router devices 101 and 102 in the virtual router system, in an ordinary time, make a VRRP operation of the conventional.

First explained is the operation of the virtual router system during the ordinary time.

The virtual router group 100 is to be identified by a virtual router identifier VRID, wherein the VRID is '1' here. The router devices 101 and 102 within the virtual router group 100 (VRID = 1) operate as virtual routers. Namely, a Virtual IP Address and a Virtual MAC Address are shared so that the master router 101 can send, by broadcast, an ARP packet (for IPv4) or a neighbour advertisement message (Neighbour Advertisement) and router advertisement message (Router Advertisement) (for IPv6) onto the network segment 110, and notifies those to the host terminals 120. As for the data directed to the host terminal 120 on the network segment 110 having the virtual router 100, the master router 101 is allowed to make a transfer processing to the external network 130 without executing a transfer processing by means of the backup router 102. In the event the master router 101 becomes incapable of executing the transfer processing due to a certain cause, the master router 101 is to send a shutdown message in accordance with a VRRP procedure.

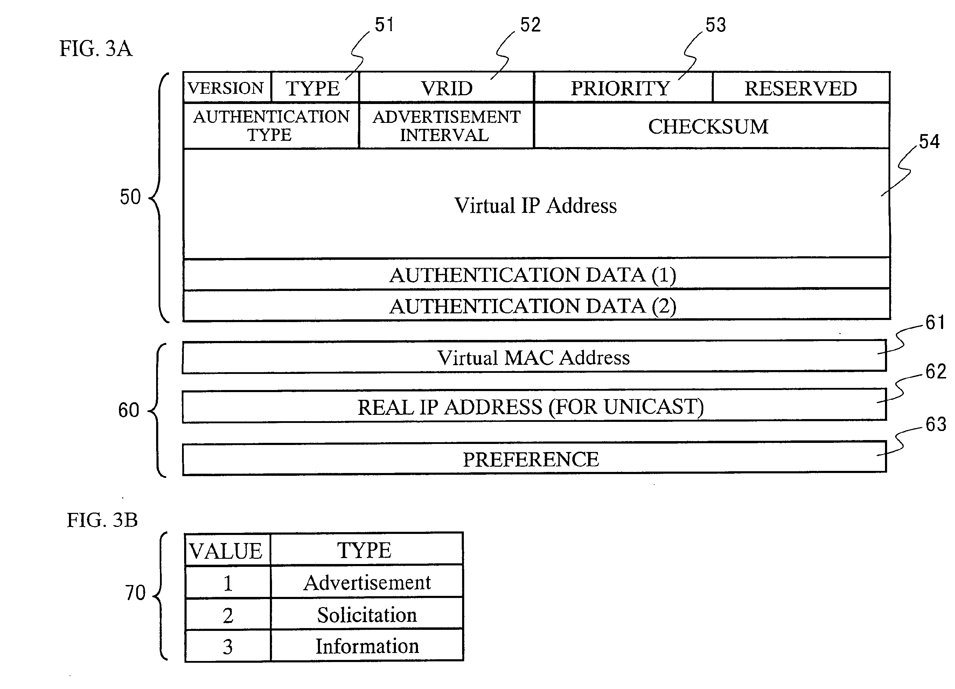

The shutdown message has a Type field 51 rendered "1" (this represents the message is an advertisement message (Advertisement)) and a Priority field 53 rendered "0", in a VRRP message 50 shown in Fig. 3(a). Meanwhile, VRID field 52 describes therein a virtual router identifier VRID representative of a virtual router group to which the router concerned belongs. A virtual IP Address field 54 describes therein a virtual router address of a virtual router group. The VRRP message 50 has other fields to describe regular pieces of information according to a VRRP procedure. The backup router 102, received a shutdown message, turns into a master router of the virtual router group 100 from then on, to execute a transfer processing with the external network 130.

The ordinary processing described so far is to be realized by a protocol defined under RFC 2338.

Now, explanation is made on the case to add newly a router 103 to the virtual router group 100.

In the prior art, there is a necessity to set the router device 103 previously with information related to the virtual router group 100, i.e. at least a virtual IP address, a virtual MAC address and a priority. However, in the present invention, the router device 103 is allowed to automatically set with those pieces of information by an acquisition from the master router device 101 of the virtual router group 100.

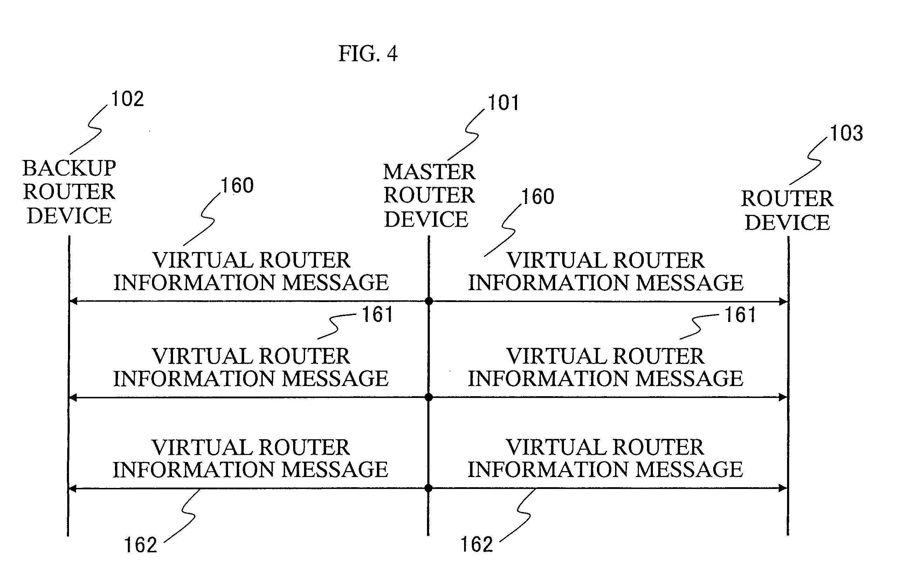

Figs. 4 to 7 are sequence charts for exchanging the setting information as required upon registering the router device 103 to the virtual router group 100. The sequences are explained in the below.

In Fig. 4, the master router device 101 makes broadcast transmissions of virtual router information messages 160 - 162 (VRINFO Advertisements) at a constant time interval. For example, the master router device 101 sends the virtual router information messages in the order of 160, 161 and 162. The router device 103, when receiving any of the virtual router information messages 160 - 162, extracts the virtual router information and sets it therein.

Incidentally, the virtual router information messages 160 - 162 is structured having the Type field 51 of VRRP message 50 shown in Fig. 3 rendered '1' (representing an advertisement message (Advertisement)) based on the Type field value 70 shown in Fig. 3(b), and an option field 60 added with a Virtual MAC Address field 61.

Meanwhile, the virtual router information message 161 - 162 may be structured that the Type field 51 is given '3' (Information) newly defined based on a Type field value 70 while the option field 60 is added with a Virtual MAC Address field 61. Incidentally, in the latter case, the virtual router information message 151 does not have an effect upon the backup router device 102 (e.g. replacing the master backup function by comparing the priority) as by the VRRP advertisement packet, but is meant as a message for merely distributing information. This is because the master router 101, where not a router device of the invention, could not recognize but ignores the type field as '3' (Information).

The virtual router information, which the router device 103 has extracted from the virtual router information message 161, includes at least a VRID (from the VRID field 52), a virtual IP address (from Virtual IP Address field 54) and a Virtual MAC address field 61. Furthermore, from the priority described in the Priority field 53, a suitable priority may be calculated and set. Meanwhile, if the virtual router information message 161 has no Virtual MAC Address field 61, the router device 103 is required to extract, from layer 2 header, a source MAC address with which the virtual router information message 161 has been transferred by the layer 2 protocol.

Furthermore, in the virtual router information message 161, the option field 60 can be added with a Real IP Address field 62, a Preference field 63 and so on. This enables to detect an illicit message or calculate its own priority.

Namely, reception message confirmation as not illicit is possible by a transmission with describing a real IP address (not a virtual IP address) of the router device (mater router device 101, here) sent the virtual information message 151 in the Real IP Address field 62, and by using means of address authentication, etc. at the router device 103 received the message. This is effective upon transferring a global IP address particularly in an IPv6 environment. Meanwhile, the application of such a cipher protocol as IPsec enables to detect a disguise, illicit message.

The Preference field 63 can describe a performance, etc. of a router device (mater router 101, here) to send the virtual router information message 161. For example, where the performance, such as of data processing capability, is high and sufficient for operation as a master router device, a great numeric value is described. Where the performance is low and the operation as a master router device is to be avoided to a possible extent, a small numeric value is described. The router device 103 received the message may calculate its own priority on the basis of the information described in the Preference field 63 and the information described in the Priority field 53.

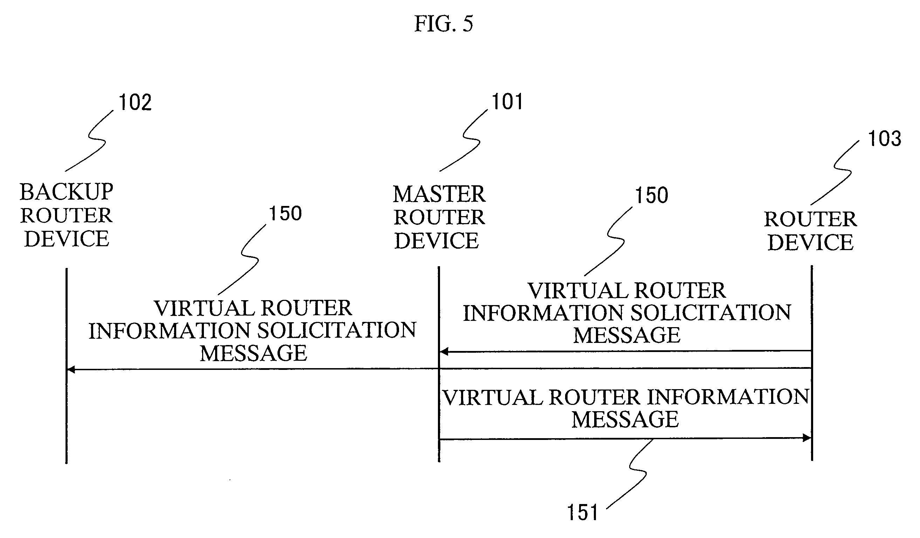

Another method of operation is as shown in Fig. 5. A router device 103, to newly connect, makes a broadcast transmission of virtual router information solicitation message 150 (VRINFO Solicitation) in a predetermined timing. In response to that, a master router device 101 of a virtual router group 100 sends the same virtual router information message 151 (VRINFO Advertisement) as the virtual router information message 160 - 162 of Fig. 4. The router device 103, when receiving the virtual router information message 151, extracts the virtual router information and sets it therein similarly to the foregoing.

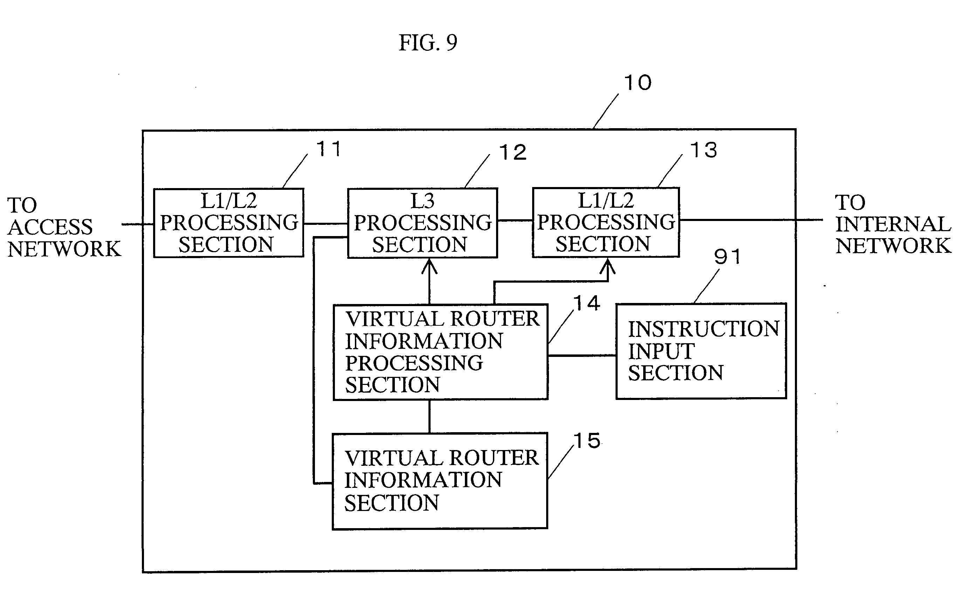

Due to this, because there are no regular broadcasts of virtual router information messages 160 - 162 from the master router device 101, traffic load is prevented from increasing over the network. Incidentally, the predetermined timing refers to a time when connection completes in the layer 3 (IP layer), i.e. a time when an IP address is acquired or produced to enable IP packet exchange, or timing the user explicitly gives a button pushdown or so to an instruction input section 91 as shown in Fig. 9.

Here, the virtual router information message 151 may be sent, by unicast or broadcast, to the router device 103 as a source of the virtual router information solicitation message 150. The backup router device 102, even when receiving the virtual router information solicitation message 150, does not send a virtual router information message 151.

Note that the virtual router information solicitation message 150 has a Type field 51 of VRRP message 50 rendered '2' (this means solicitation message (Solicitation)) newly defined based on the Type field value 70 shown in Fig. 3.

Besides, the virtual router information solicitation message 150 may be added with a Real IP Address field 62 describing an IP address of the router device 103. In this case, the router device to send a virtual router information message 151 (master router device 101, here) makes a unicast transmission to the IP address described in the Real IP Address described in a Real IP Address field 62 of the received virtual router information solicitation message 150. This can prevent the traffic to the other communication device from increasing over the network.

Incidentally, the virtual router information solicitation message 150 and virtual router information message 151 may take a structure other than the structure shown in Fig. 3(a). The structure is not to be limited by the invention.

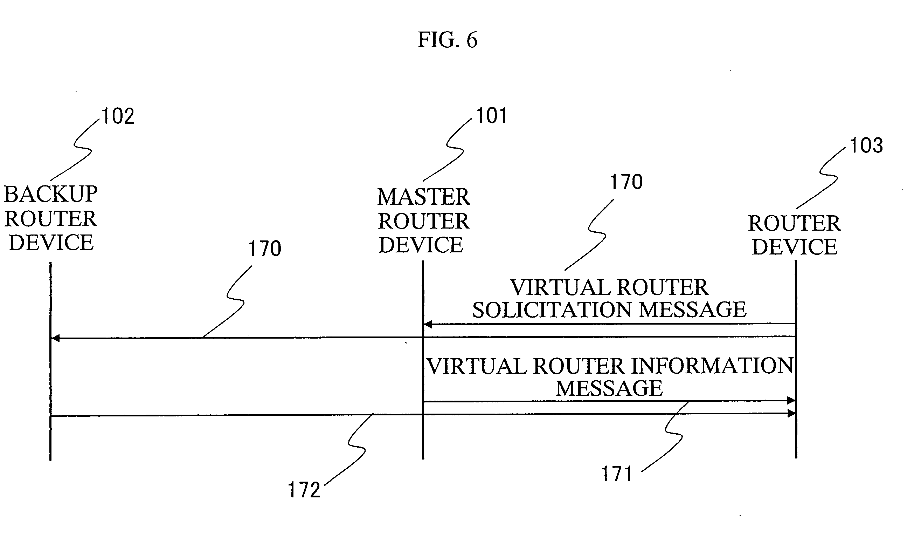

Every router device, when receiving a virtual router information solicitation message 150, is allowed to forward a virtual router information message 151 irrespectively of the mode (master/backup). In Fig. 6, the router device 103 to newly connect makes a broadcast transmission of virtual router information solicitation message 170 (VRINFO Solicitation) in a predetermined timing. In response, all the router devices (master router device 101, backup router device 102) within the virtual router group 100 send virtual router information messages 171, 172 (VRINFO Advertisements). Here, the virtual router information messages 171, 172 may be sent, by unicast or multicast, to the router device 103 as a source of the virtual router information solicitation message 170. The router device 103, when receiving the virtual router information message 171, 172, extracts virtual router information and sets it therein. The virtual router information message 171, 172 and virtual router information uses a structure explained before. Particularly, the backup router device 102 is not allowed, under the protocol rule, to send a VRRP message having a Type field 51 rendered '1' (Advertisement). Hence, it sends a virtual router information message 181, 183 with its Type field 51 rendered '3' (Information). Due to this, the router device 103 to newly connect to the network is allowed to acquire virtual router information from any of the router devices 101, 102 which is the first to make a response. Meanwhile, even where the master router device is not a router device of the invention and hence recognition is impossible as a virtual router solicitation message, the backup router device 102 if can recognize the virtual router solicitation message is to send back virtual router information message. Thus, virtual router information can be obtained.

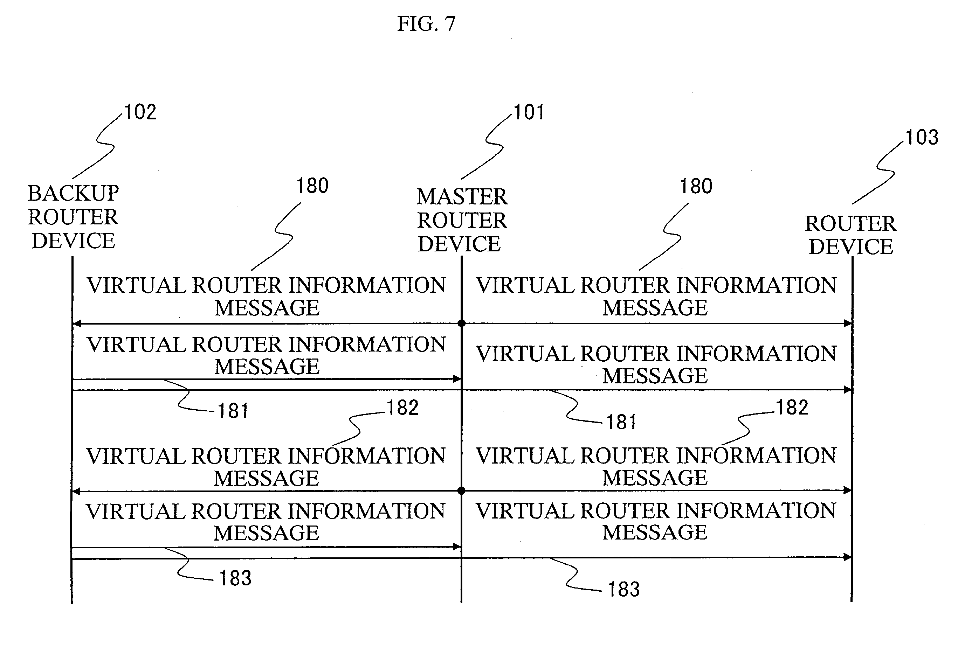

Besides, as another method of operation, all the virtual routers can be made to forward virtual router information messages 151 at a regular interval. In Fig. 7, all the router devices (master router device 101, backup router device 102) within the virtual router group 100 sends, by broadcast, virtual router information messages 180 - 183 (VRINFO Advertisement) at a constant time interval. For example, at a 1-second interval, the master router device 101 sends virtual router information messages 180, 182 in the order thereof while the backup router device 102 sends virtual router information messages 181, 183 in the order thereof. The router device 103 to newly connect to the network, when receiving any of virtual router information messages 180 - 183, extracts virtual router information and sets it therein. The virtual router information message 180 - 183 and virtual router information uses a structure explained before. However, the backup router device 102 is not allowed, under the protocol rule, to send a VRRP message having a Type field 51 rendered '1' (Advertisement). Hence, it sends a virtual router information message 172 with its Type field 51 rendered '3' (Information). Due to this, the router device to newly connect to the network, even when the master router device is not a router device of the invention, is allowed to acquire virtual router information provided that the backup router device is a router device of the invention.

Using the drawings, explanation is made on the operation of the router device 10 in the virtual router system as to the invention.

Fig. 1 is a configuration diagram of the router device 10. This is structured with a first L1/L2 processing section 11 for executing a physical layer process and a data-link layer process, an L3 processing section 12 for executing a network layer process, a second L1/L2 processing section 13 for executing a data-link layer process, a virtual router information processing section 14 and a virtual router processing section 15. The L1/L2 processing section 13 corresponds to a receiving section for receiving the virtual router information required for a virtual router process. The virtual router processing section 15 is to execute a virtual router processing for operating a plurality of router devices connected to a local area network virtually as one router device. The virtual router information processing section 14 is to make a setting required for an operation as a virtual router device depending upon virtual router information, or to control for requesting or forwarding virtual router information. Incidentally, Fig. 1 shows the L1/2 processing sections 11, 13 merely up to two in the number, the greater number of L1/2 processing sections may be structurally provided, the number of which is not to be limited by the invention.

Explanation is now made on the basic operation of the router device 10 configured as above.

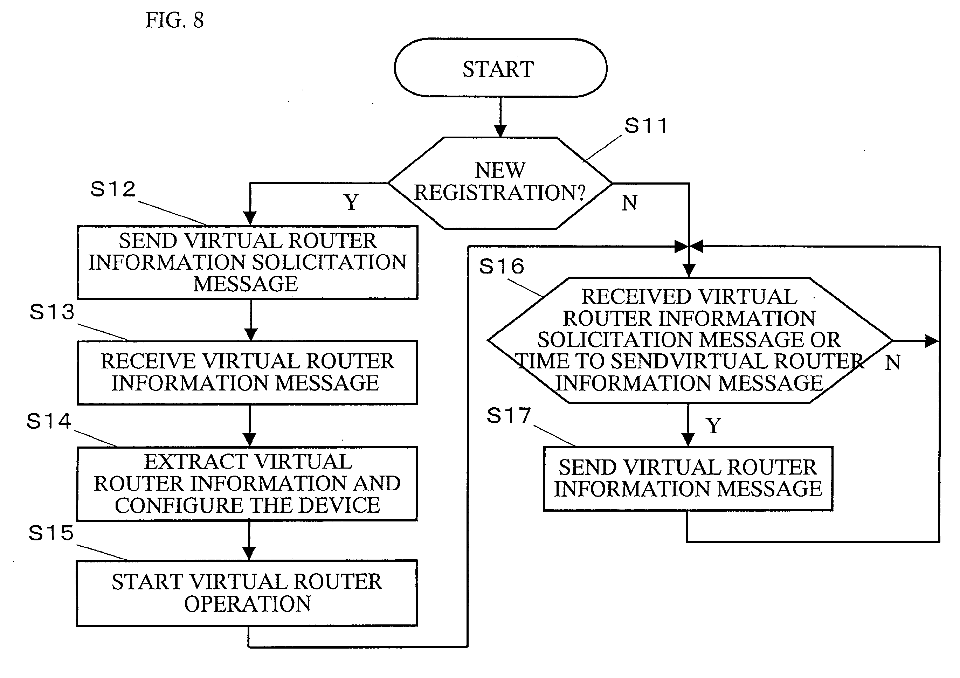

Incidentally, the packet transfer process by the router device 10 is a standard one that is to transfer the IP packet received by L1/2 processing section 11 or 13 to the suited L1/2 processing section 11 or 13 according to a routing table held by the L3 processing section 12. Now, explanation is made on the operation of the router device 10 in the case of registering the router device 10 to the virtual router group 100, particularly the virtual router information processing section 14 of the invention, by use of an operation flow chart shown in Fig. 8.

At first, detected is a registration timing to the virtual router group 100, e.g. a connection of the router device 10 to the network or an explicit trigger given by the user (switch turn-on, button pushdown or so) (step S11).

Then, the virtual router information processing section 14 generates a virtual router information solicitation message 150 and sends it, by broadcast, onto the network segment 110 through the L3 processing section 12 and L1/2 processing section 13 (step S12).

Then, the virtual router information processing section 14, when receiving the virtual router information message from the network segment 110 through the L1/2 processing section 13 and L3 processing section 12 (step S13), extracts at least a VRID, a virtual IP address and a virtual MAC address from the message, and further stores them, as virtual router information, together with a priority previously or dynamically calculated to a memory/storage area (step S14).

Next, the virtual router information processing section 14 transfers the virtual router information to the virtual router processing section 15, directly or indirectly through the memory/storage area. The virtual router processing section 15, received it, commences a virtual router processing (step S15).

Incidentally, in the case of the operation of Fig. 4, the process moves to a process to receive a virtual router information message (step S13) without sending a virtual router information solicitation message (step S12 omittable).

The virtual router process, to be started operation by step S15, is relevant to the conventional virtual router processing protocol such as VRRP, and hence the detail of which is not described in the flowchart of Fig. 8. The virtual router process is triggered at the step S15 and then executed by the virtual router processing section 15 concurrently with the process steps S16, S17 of the invention. Otherwise, the subsequent process (steps S16, S17) may be executed in the conventional virtual router process to be executed by the virtual router processing section 15.

Now, explanation is made on the operation of the router device 10 after the router device 10 has been registered to the virtual router group 100.

At first, the virtual router information processing section 14 receives a virtual router information solicitation message of from the to-be-newly-registered router device concurrently with the virtual router operation executed by the virtual router processing section 15, or waits for a time-out for regularly sending virtual router information messages at a predetermined time interval (step S16). In case there is satisfied the condition of the step S16, i.e. receiving a virtual router information solicitation message, or detecting an arrival at the timing to transmit a virtual router information message, the virtual router information processing section 14 describes the virtual router information stored in the memory/storage area before or acquired from the virtual router processing section 15 to the virtual router information message and sends it onto the network segment 110 through the L3 processing section 12 and L1/2 processing section 13 (step S17).

Here, the router device 10 decides as to transmission execution of a virtual router information message, depending upon the operation status. For example, where obeying the sequence shown in Figs. 4 and 5, the router device 10 sends a virtual router information message only when operating as a master router device 101. Namely, where operating as a backup router device 102, no virtual router information messages are sent and further the steps S16, S17 are omitted. This can prevent the traffic from increasing over the network.

Meanwhile, where obeying the sequence shown in Figs. 6 and 7, the router device 10 sends a virtual router information message regardless whether it is a master router device 101 or a backup router device 102. However, in the case of operating as a backup router device 102, the Type field 51 is rendered '3' (this means an information message (Information)) in the message structure shown in Fig. 3(b) as shown before, thereby being concerted with the conventional virtual router redundant protocol (VRRP).

Incidentally, in the operation flowchart of Fig. 8, the process returns to step S16 after sending a virtual router information message (step S17). However, the step S11 may be executed again following the step S17.

Meanwhile, the present embodiment is configured to acquire virtual router information from the existing router device. However, this is not limitative but a virtual router information distribution server can be provided for a newly connecting router to acquire virtual router information required. In this case, because virtual router information is distributed from the virtual router information distribution server, similar effect can be obtained now that the newly connecting router device is a router device of the invention even in case the existing router device on the network is not a router device of the invention.

As described above, the router device 10 of the invention, when newly connecting to the network, can dynamically acquire virtual router information from the existing router system and set with data required for its own virtual router processing. This can automatically make a virtual router setting in a brief time, thus relieving the load on the manager (operator) and reducing communication loss.

### INDUSTRIAL APPLICABILITY

This invention is useful for router setting method and router device for registering a new router device to a virtual router system on a mobile IP (Internet Protocol) network, and particularly suited in making an initial setting for a virtual router system on a mobile network where the network is movable.

## Claims

1. A router setting method comprising:
a step for a first router device for executing a virtual router process for operating, virtually as one router device, a plurality of router devices connected to a local area network, to send virtual router information as information required for the virtual router process to a second router device newly connected to the local network;
a step for the newly connected second router device to receive the virtual router information; and
a step for the second router device to make a setting required for the virtual router process, on a basis of the virtual router information.

2. A router setting method according to claim 1, further comprising a step for the newly connected second router device to request the virtual router information to the first router device,
the first router device, received the request, sending the virtual router information to the second router device.

3. A router setting method according to claim 1, wherein the first router device sends the virtual router information at a regular interval.

4. A router setting method according to claim 1, wherein the virtual router information includes a virtual router identifier, a virtual IP address and a virtual MAC address.

5. A router setting method according to claim 2, wherein the virtual router information includes a virtual router identifier, a virtual IP address and a virtual MAC address.

6. A router setting method according to claim 3, wherein the virtual router information includes a virtual router identifier, a virtual IP address and a virtual MAC address.

7. A router device comprising:
a virtual router processing section for operating, virtually as one router device, a plurality of router devices connected to a local area network;
a receiving section for receiving virtual router information required for the virtual router process; and
a virtual router information processing section for making a setting required for the virtual router process, on a basis of the virtual router information.

8. A router device according to claim 7, wherein the virtual router information processing section further executes, in a predetermined timing, a process to request for the virtual router information.

9. A router device according to claim 8, wherein the predetermined timing is at a time the virtual router information processing section detects a connection to the local area network.

10. A router device according to claim 7, further comprising an instruction input section where a request instruction for virtual router information is to be made from a user, to execute a process for requesting for virtual router information when the virtual router information processing section is inputted with the instruction.

11. A router device according to claim 7, wherein the virtual router information processing section, when receiving a request for the virtual router information, further executes a process to send the virtual router information being set as a response thereto to the router sending the request.

12. A router device according to claim 8, wherein the virtual router information processing section, when receiving a request for the virtual router information, further executes a process to send the virtual router information being set as a response thereto to the router sending the request.

13. A router device according to claim 9, wherein the virtual router information processing section, when receiving a request for the virtual router information, further executes a process to send the virtual router information being set as a response thereto to the router sending the request.

14. A router device according to claim 10, wherein the virtual router information processing section, when receiving a request for the virtual router information, further executes a process to send the virtual router information being set as a response thereto to the router sending the request.

15. A router device according to claim 7, wherein the virtual router information processing section sends the virtual router information at a regular interval.
